# EUROPEAN PATENT APPLICATION

(11) **EP 3 863 244 A1**
(43) Date of publication of application: **11.08.2021**
(21) Application number: 19881176.2
(22) Date of filing: 04.11.2019
(51) Int. Cl.: H04L 12/741, H04L 12/721

(54) **ROUTE PROCESSING METHOD, APPARATUS, AND DEVICE**

(30) Priority: 08.11.2018 CN 201811325812
(71) Applicant: Huawei Technologies Co., Ltd., Shenzhen, Guangdong 518129 (CN)
(72) Inventor: ZHANG, Xudong, Shenzhen, Guangdong 518129 (CN); JIANG, Rong, Shenzhen, Guangdong 518129 (CN); XU, Haijun, Shenzhen, Guangdong 518129 (CN); GUO, Feng, Shenzhen, Guangdong 518129 (CN); XIONG, Yi, Shenzhen, Guangdong 518129 (CN)
(74) Representative: MERH-IP Matias Erny Reichl Hoffmann Patentanwälte PartG mbB
(86) International application number: PCT/CN2019/115232
(87) International publication number: WO 2020/093958

(57) **Abstract**

Embodiments of this application disclose a routing processing method and apparatus, and a related device, applied to a first network device. A plurality of routing processing modules run on the first network device, and the plurality of routing processing modules implement a same routing processing function. The method includes: obtaining routing processing results respectively output by the plurality of routing processing modules based on same input routing information; and analyzing the routing processing results output by the plurality of routing processing modules, selecting, based on an analysis result, a first routing processing result among the routing processing results output by the plurality of routing processing modules, and executing a corresponding action based on the first routing processing result. The routing processing method and apparatus, and the related device disclosed in the embodiments of this application resolve service interruption caused by a logic error inside a routing processing module.

## Description

This application claims priority to Chinese Patent Application No. 201811325812.8, filed with the China National Intellectual Property Administration on November 8, 2018 and entitled "ROUTING PROCESSING METHOD, APPARATUS, AND DEVICE", which is incorporated herein by reference in its entirety.

### TECHNICAL FIELD

This application relates to the field of network communications, and in particular, to a routing processing method, apparatus, and device.

### BACKGROUND

As technologies develop, a software module, for example, a routing processing module, may run in a network device. The route processing module is configured to process routing information and output a routing processing result. In a conventional technology, some means for detecting whether the routing processing module can run normally is used to determine whether to perform fault tolerance protection on the routing processing module, to ensure reliability of the routing processing module. For example, whether a process used when the routing processing module is running is normal, whether a memory of a network device is sufficient, and whether CPU resource consumption is normal are detected. If an abnormal process, an insufficient memory, abnormal CPU resource consumption, or the like is detected during running of the routing processing module, it is considered that a fault occurs during the running of the routing processing module. Therefore, a fault tolerance measure is required to reduce a probability of a service loss.

However, in addition to the running fault, a logic error may occur in the routing processing module. Although the routing processing module runs normally, data output is incorrect due to the logic error inside the routing processing module. As a result, subsequent service processing is affected. For example, if the routing processing module release an incorrect route, service data may be lost or a packet may be incorrectly forwarded, and service interruption is caused.

However, currently, there is no technical solution to resolve the service interruption caused by the logic error inside the routing processing module.

### SUMMARY

Embodiments of this application provide a routing processing method and apparatus, and a related device, to resolve service interruption caused by a logic error inside a routing processing module.

According to a first aspect, an embodiment of this application provides a routing processing method. The method may be applied to a first network device. The first network device may be an embedded device, for example, a router, a switch, or a software defined networking (software defined network, SDN) controller, or may be a virtualized network functions virtualization (network function virtualization, NFV) device running on a server. This is not specifically limited in this application. A plurality of routing processing modules run on the first network device, and the plurality of routing processing modules implement a same routing processing function. For example, the routing processing function includes generating a routing entry based on routing information, and updating a routing table (routing information base, RIB) of the first network device according to the generated routing entry, generating a routing update packet based on routing information, where the routing update packet is used to update a routing table of another network device, and the like. Updating a routing table may be adding, deleting, or modifying a routing entry in the routing table. The routing processing method includes: obtaining routing processing results respectively output by the plurality of routing processing modules based on same input routing information; and analyzing the routing processing results output by the plurality of routing processing modules, selecting, based on an analysis result, a first routing processing result among the routing processing results output by the plurality of routing processing modules, where the first routing processing result may be considered as a routing processing result output by a routing processing module with a correct logic, and executing a corresponding action based on the first routing processing result. This prevents a service data loss or a packet forwarding error, resolves service interruption, and improves reliability of the routing processing module.

Time for outputting the routing processing results by the plurality of routing processing modules may be different. Therefore, to determine that the routing processing results from the plurality of routing processing modules are obtained, optionally, the method further includes: starting a timer after the routing processing results from the plurality of routing processing modules are obtained; and when the timer expires, triggering a step of the analyzing the routing processing results output by the plurality of routing processing modules.

Usually, a small quantity of routing processing modules have a logic error, and a large quantity of routing processing modules are normal. Therefore, the routing processing results output by the plurality of routing processing modules may be analyzed according to a majority rule.

In a possible implementation, the selecting, based on an analysis result, a first routing processing result among the routing processing results output by the plurality of routing processing modules includes: grouping the routing processing results output by the plurality of routing processing modules, where each group includes a same routing processing result; and when a quantity of routing processing results in one group is greater than a quantity of routing processing results in any other group, selecting any one of the routing processing results in the group as the first routing processing result.

If the plurality of routing processing modules include at least three routing processing modules, in one possible implementation, the selecting, based on an analysis result, a first routing processing result among the routing processing results output by the plurality of routing processing modules includes: when a quantity of same routing processing results among routing processing results output by the at least three routing processing modules is greater than half of a total quantity of routing processing results selecting any one of the same routing processing results as the first routing processing result.

To improve analysis efficiency, optionally, the analyzing the routing processing results output by the plurality of routing processing modules includes: separately calculating a checksum (checksum) of a routing processing result output by each of the plurality of routing processing modules; and analyzing checksums respectively corresponding to the plurality of routing processing modules.

A specific method for analyzing the checksum is similar to the method for analyzing the routing processing result. To be specific, the majority rule can also be used for the analysis.

In a possible implementation, the selecting, based on an analysis result, a first routing processing result among the routing processing results output by the plurality of routing processing modules includes: grouping the checksums corresponding to the plurality of routing processing modules, where each group includes a same checksum; and when a quantity of checksums in one group is greater than a quantity of checksums in any other group, selecting a routing processing result corresponding to any checksum among checksums in the group as the first routing processing result.

If the plurality of routing processing modules include the at least three routing processing modules, in another possible implementation, the selecting, based on an analysis result, a first routing processing result among the routing processing results output by the plurality of routing processing modules includes: when a quantity of same checksums in checksums corresponding to the at least three routing processing modules is greater than half of a total quantity of checksums, selecting any checksum among the same checksums based on the analysis result, and using a routing processing result corresponding to the any checksum as the first routing processing result.

In this embodiment of this application, different actions may be executed for different routing processing results.

If the first routing processing result includes a first routing entry, the executing a corresponding action based on the first routing processing result includes: updating an original routing table of the first network device according to the first routing entry, to obtain a first routing table of the first network device.

If the first routing processing result includes first routing update information, the executing a corresponding action based on the first routing processing result includes: sending a first routing update packet to a second network device, where the first routing update packet carries the first routing update information, and the first routing update information is used to update an original routing table of the second network device, to obtain a first routing table of the second network device.

To improve service processing efficiency on a basis of resolving the service interruption, optionally, a corresponding action may be executed based on a second routing processing result before a corresponding action is executed based on the first routing processing result. The second routing processing result is a routing processing result output by one of the plurality of routing processing modules. If the first routing processing result is the same as the second routing processing result, it is equivalent to verifying that the second routing processing result is correct. In this way, the service interruption is avoided, the reliability of the routing processing module is ensured, and the service processing efficiency is improved. If the first routing processing result is different from the second routing processing result, a remedial measure may be taken to finally achieve an effect of executing a corresponding action based on the first routing processing result. Specific remedial measures may vary based on different routing processing results.

Specifically, if the first routing processing result includes a first routing entry, and the routing processing results output by the plurality of routing processing modules include a second routing entry, before the executing a corresponding action based on the first routing processing result, the method further includes: updating an original routing table of the first network device according to the second routing entry, to obtain a second routing table of the first network device; and the executing a corresponding action based on the first routing processing result includes: when the first routing entry is different from the second routing entry, determining routing update data based on a difference between the first routing entry and the second routing entry; and updating the second routing table based on the routing update data, to obtain a first routing table of the first network device.

If the first routing processing result includes first routing update information, and the routing processing results output by the plurality of routing processing modules include second routing update information, before the executing a corresponding action based on the first routing processing result, the method further includes: sending a second routing update packet to a second network device, where the second routing update packet carries the second routing update information, and the second routing update information is used to update an original routing table of the second network device, to obtain a second routing table of the second network device; and the executing a corresponding action based on the first routing processing result includes: when the second routing update information is different from the first routing update information, obtaining third routing update information based on a difference between the second routing update information and the first routing update information; and sending a first routing update packet to the second network device, where the first routing update packet carries the third routing update information, and the third routing update information is used to update a second routing table of the second network device, to obtain a first routing table of the second network device.

Optionally, steps of obtaining routing processing results respectively output by the plurality of routing processing modules based on same input routing information, and analyzing the routing processing results output by the plurality of routing processing modules, and selecting, based on an analysis result, a first routing processing result among the routing processing results output by the plurality of routing processing modules may be performed by a logical voting database. In other words, the logical voting database has a function of storing the routing processing results output by the plurality of routing processing modules, and has a function of analyzing the routing processing results.

Optionally, a step of executing a corresponding action based on the first routing processing result may be performed by the logical voting module.

According to a second aspect, an embodiment of this application further provides a routing processing apparatus, applied to a first network device. A plurality of routing processing modules run on the first network device, and the plurality of routing processing modules implement a same routing processing function. The apparatus includes: an obtaining module, configured to obtain routing processing results respectively output by the plurality of routing processing modules based on same input routing information; an analysis module, configured to analyze the routing processing results output by the plurality of routing processing modules, and select, based on an analysis result, a first routing processing result among the routing processing results output by the plurality of routing processing modules; and an execution module, configured to execute a corresponding action based on the first routing processing result.

Optionally, the apparatus further includes: a start module, configured to start a timer after the routing processing results from the plurality of routing processing modules are obtained, and trigger the analysis module when the timer expires.

Optionally, the analysis module is configured to: group the routing processing results output by the plurality of routing processing modules, where each group includes a same routing processing result, and when a quantity of routing processing results in one group is greater than a quantity of routing processing results in any other group, select any one of the routing processing results in the group as the first routing processing result.

Optionally, the plurality of routing processing modules include at least three routing processing modules; and
the analysis module is configured to: when a quantity of same routing processing results among routing processing results output by the at least three routing processing modules is greater than half of a total quantity of routing processing results, select any one of the same routing processing results as the first routing processing result.

Optionally, that the routing processing results output by the plurality of routing processing modules are analyzed includes: a checksum of a routing processing result output by each of the plurality of routing processing modules is separately calculated; and checksums respectively corresponding to the plurality of routing processing modules are analyzed.

Optionally, that the first routing processing result among the routing processing results output by the plurality of routing processing modules is selected based on the analysis result includes: the checksums corresponding to the plurality of routing processing modules are grouped, where each group includes a same checksum; and when a quantity of checksums in one group is greater than a quantity of checksums in any other group, a routing processing result corresponding to any checksum among checksums in the group is selected as the first routing processing result.

Optionally, the plurality of routing processing modules include the at least three routing processing modules; and
the first routing processing result among the routing processing results output by the plurality of routing processing modules is selected based on the analysis result includes: when a quantity of same checksums in checksums corresponding to the at least three routing processing modules is greater than half of a total quantity of checksums, any checksum among the same checksums is selected based on the analysis result, and a routing processing result corresponding to the any checksum is selected as the first routing processing result.

Optionally, the first routing processing result includes a first routing entry; and
the execution module is configured to update an original routing table of the first network device according to the first routing entry, to obtain a first routing table of the first network device.

Optionally, the first routing processing result includes a first routing entry, and the routing processing results output by the plurality of routing processing modules includes a second routing entry; and
the apparatus further includes: an update module, configured to update an original routing table of the first network device according to the second routing entry, to obtain a second routing table of the first network device; where
the execution module is configured to: when the first routing entry is different from the second routing entry, determine routing update data based on a difference between the first routing entry and the second routing entry,

and update the second routing table based on the routing update data, to obtain a first routing table of the first network device.

Optionally, the first routing processing result includes first routing update information; and
the execution module is configured to send a first routing update packet to a second network device, where the first routing update packet carries the first routing update information, and the first routing update information is used to update an original routing table of the second network device, to obtain a first routing table of the second network device.

Optionally, the first routing processing result includes first routing update information, and the routing processing results output by the plurality of routing processing modules include second routing update information; and
the apparatus further includes: a sending module, configured to send a second routing update packet to a second network device, where the second routing update packet carries the second routing update information, and the second routing update information is used to update an original routing table of the second network device, to obtain a second routing table of the second network device; and
the execution module is configured to: when the second routing update information is different from the first routing update information, obtain third routing update information based on a difference between the second routing update information and the first routing update information; and send a first routing update packet to the second network device, where the first routing update packet carries the third routing update information, and the third routing update information is used to update a second routing table of the second network device, to obtain a first routing table of the second network device.

Optionally, the apparatus includes a logical voting database, and the logical voting database includes the obtaining module and the analysis module.

Optionally, the execution module is a logical voting module.

According to a third aspect, an embodiment of this application further provides a routing processing device. The device is a first network device. The first network device includes a storage unit and a processing unit.

The storage unit is configured to store an instruction.

The processing unit is configured to execute the instruction in the memory, to perform the routing processing method.

According to a fourth aspect, an embodiment of this application further provides a computer-readable storage medium, including an instruction. When the instruction is run on a computer, the computer is enabled to perform the routing processing method.

### BRIEF DESCRIPTION OF DEAWINGS

FIG. 1 is a flowchart of a routing processing method according to an embodiment of this application;
FIG. 2A and FIG. 2B are another flowchart of a routing processing method according to an embodiment of this application;
FIG. 3A to FIG. 3C are another flowchart of a routing processing method according to an embodiment of this application;
FIG. 4 is a structural block diagram of a routing processing apparatus according to an embodiment of this application; and
FIG. 5 is an architectural diagram of hardware of a routing processing device according to an embodiment of this application.

### DESCRIPTION OF EMBODIMENTS

Embodiments of this application provide a routing processing method and apparatus, and a related device, to resolve service interruption caused by a logic error inside a routing processing module, and improve reliability of the routing processing module.

The following describes the technical solutions of this application in detail with reference to the accompanying drawings.

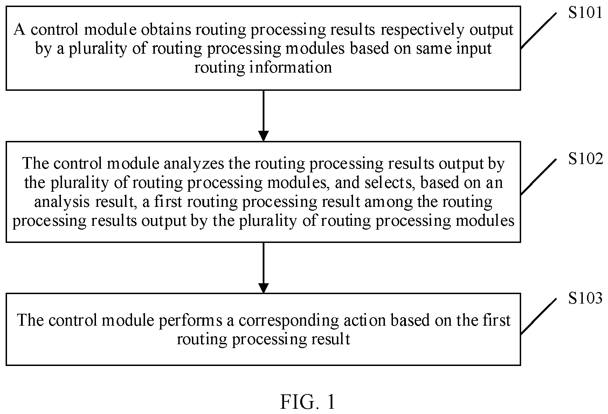

FIG. 1 is a flowchart of a routing processing method according to an embodiment of this application.

The routing processing method provided in this embodiment of this application may be applied to a first network device. The first network device may be an embedded device such as a router, a switch, or an SDN controller, or may be a virtualized NFV device running on a server. This is not specifically limited in this application.

A plurality of routing processing modules run on the first network device, and the plurality of routing processing modules run independently to implement a same routing processing function. For example, the routing processing function includes generating a routing entry based on routing information, and updating a routing table of the first network device according to the generated routing entry, generating a routing update packet based on routing information, where the routing update packet is used to update a routing table of another network device, and the like. Updating a routing table may be adding, deleting, or modifying a routing entry in the routing table. Versions of the plurality of routing processing modules may be the same or different. To implement the same routing function, the plurality of routing processing modules may run same or different routing algorithms.

Specifically, in this embodiment of this application, a module of the first network device, that performs the routing processing method may be referred to as a control module. The method specifically includes the following steps.

S101: The control module obtains routing processing results respectively output by the plurality of routing processing modules based on same input routing information.

In this embodiment of this application, to determine whether a logic error occurs in the plurality of routing processing modules, the same routing information may be input into the plurality of routing processing modules. The plurality of routing processing modules process the input routing information, and output respective routing processing results.

If no logic error occurs in the plurality of routing processing modules, the plurality of routing processing modules process the same routing information to obtain same routing processing results. If the logic error occurs in one or more routing processing modules among the plurality of routing processing modules, a routing processing result output by a routing processing module where the logic error occurs is to a great extent different from a routing processing result output by another routing processing module where no logic error occurs. Therefore, the routing processing results output by the plurality of routing processing modules are analyzed to determine which routing processing module has the logic error and which routing processing module does not have the logic error.

The routing information input into the plurality of routing processing modules may be, for example, a packet sent by another network device. The packet may be, for example, a border gateway protocol (Border Gateway Protocol, BGP) update (update) message. The BGP update message carries network layer reachability information (Network Layer Reachability Information, NLRI). The routing information carried in the packet may include, for example, a source internet protocol (Internet Protocol, IP) address, a source media access control (media access control, MAC) address, a destination address, a protocol number, a port number, or an autonomous system identifier. The routing information input into the plurality of routing modules may alternatively be routing information of a neighboring node of the first network device or routing information of another type.

The plurality of routing processing modules output the routing processing results after processing the routing information, and the routing processing result may be a routing entry, routing update information, or the like.

The routing entry is used to update a routing table of a first network device, and the routing entry may include, for example, a destination IP address, a next-hop address, and an outbound interface.

The routing update information is used to update a routing table of a second network device, and the routing update information may include an update instruction and update data. The update instruction includes, for example, modifying a routing entry in the routing table of the second network device, deleting a routing entry in the routing table of the second network device, and/or adding a routing entry in the routing table of the second network device based on the update data.

S102: The control module analyzes the routing processing results output by the plurality of routing processing modules, and selects, based on an analysis result, a first routing processing result among the routing processing results output by the plurality of routing processing modules.

S103: The control module performs a corresponding action based on the first routing processing result.

Usually, a small quantity of routing processing modules have a logic error, and a large quantity of routing processing modules are normal. Therefore, the routing processing results output by the plurality of routing processing modules may be analyzed according to a majority rule.

As a possible implementation, the step S102 may be grouping the routing processing results output by the plurality of routing processing modules, and grouping all same routing processing results into a same group. Each routing processing module outputs one routing processing result. Each group includes one or more routing processing results. When one group has a plurality of routing processing results, the routing processing results need to be the same. When a quantity of routing processing results in one group is greater than a quantity of routing processing results in any other group, a corresponding action is executed based on any one of the routing processing results in the group.

For example, it is assumed that routing processing results output by two routing processing modules are the same. The routing processing results output by the two routing processing modules may be grouped into one group. Therefore, any one of the two routing processing results in the group may be selected as the first routing processing result, and the corresponding action is executed based on the first routing processing result.

For example, it is assumed that routing processing results output by three routing processing modules may be grouped into two groups. A first group includes two routing processing results, and the two routing processing results are the same. A second group includes one routing processing result. The routing processing result included in the second group is different from the two routing processing results in the first group. A quantity of the routing processing results included in the first group is greater than a quantity of the routing processing results included in the second group. Therefore, any one of the two routing processing results in the first group may be selected as the first routing processing result, and the corresponding action is executed based on the first routing processing result.

For another example, it is assumed that routing processing results output by six routing processing modules may be grouped into two groups. A first group includes four routing processing results, and the four routing processing results are the same. A second group includes two routing processing results, and the two routing processing results are the same, but are different from the four routing processing results in the first group. A quantity of the routing processing results included in the first group is greater than a quantity of the routing processing results included in the second group. Therefore, any one of the four routing processing results in the first group may be selected as the first routing processing result, and the corresponding action is executed based on the first routing processing result.

For another example, it is assumed that routing processing results output by six routing processing modules may be grouped into three groups. A first group includes three same routing processing results. A second group includes two same routing processing results. A third group includes one routing processing result. The three groups include different routing processing results. Compared with a quantity of the routing processing results included in the second group and a quantity of the routing processing results included in the third group, a quantity of the routing processing results included in the first group is the largest. Therefore, any one of the three same routing processing results in the first group may be selected as the first routing processing result, and the corresponding action is executed based on the first routing processing result.

In an actual application, if there is more than one group with the largest quantity of routing processing results, an alarm may be generated. That a routing processing result in which group is selected to be as the first routing processing result is determined in another manner, or any one of the groups with the largest quantity of routing processing results is directly selected, and any one of the routing processing results in the group is used as the first routing processing result.

For example, it is assumed that routing processing results output by two routing processing modules are grouped into two groups, and each group corresponds to one routing processing result. In other words, the two routing processing modules output different routing processing results. Therefore, it is impossible to distinguish which routing processing module has the logic error, and it can be determined which routing processing result is the first routing processing result through manual intervention of the alarm. Alternatively, one of the two routing processing results is directly selected as the first routing processing result.

For another example, it is assumed that routing processing results output by five routing processing modules may be grouped into three groups. A first group includes two same routing processing results. A second group includes two same routing processing results. A third group includes one routing processing result. A quantity of the routing processing results included in the first group is the same as a quantity of the routing processing results included in the second group. Therefore, it is impossible to distinguish which routing processing result is output by a routing processing module in which the logic error occurs, and which routing processing result is output by a routing processing module in which no logic error occurs. Therefore, the manual intervention may be performed through the alarm to determine whether one of the routing processing results in the first group or the second group is used as the first routing processing result, or a group of routing processing results may be selected among the routing processing results in the first group or the routing processing results in the second group, and then any one of the selected group of routing processing results is used as the first routing processing result.

Certainly, it may be understood that the implementation does not constitute a limitation on the step S102, and persons skilled in the art may further design the step S102 according to a specific situation. For example, the plurality of routing processing modules include at least three routing processing modules. Any one of same routing processing results is selected as the first routing processing result when a quantity of the same routing processing results among the routing processing results output by the at least three routing processing modules is greater than half of a total quantity of routing processing results. The corresponding action is executed based on the first routing processing result.

It is assumed that routing processing results output by five routing processing modules include three same routing processing results, any one of the three same routing processing results may be selected as the first routing processing result.

In addition, in this embodiment of this application, different actions may be executed for different routing processing results.

For example, if the first routing processing result is a first routing entry, an executed action may include updating an original routing table of the first network device, to obtain a first routing table of the first network device. The original routing table of the first network device indicates a routing table that is stored in the first network device and that is not updated. If the first routing processing result is first routing update information, an executed action may include sending a first routing update packet to the second network device. The first routing update packet may carry the first routing update information. The first routing update information is used to update an original routing table of the second network device, to obtain a first routing table of the second network device. The original routing table of the second network device is a routing table that is stored in the second network device and that is not updated. The second network device may be a router, a switch, an SDN controller, or the like. This is not specifically limited in this application.

In this embodiment of this application, the routing processing results output by the plurality of routing processing modules based on the same input routing information are separately obtained. The routing processing results output by the plurality of routing processing modules are analyzed. The first routing processing result among the routing processing results output by the plurality of routing processing modules is selected based on the analysis result. The first routing processing result may be considered as a routing processing result output by a normal routing processing module. In this way, the corresponding action is executed based on the first routing processing result, namely, a correct routing processing result. This can resolve service interruption caused, and improve reliability of the routing processing module. For example, the original routing table of the first network device is updated based on a correct first routing entry, and an obtained first routing table of the first network device is a correct routing table. A packet may be received or forwarded based on the correct routing table, to avoid the service interruption caused by a packet loss or a forwarding error. Likewise, a correct first routing update packet is sent to the second network device, so that the second network device updates the original routing table of the second network device based on the correct first routing update packet to obtain the first routing table of the second network device. A packet may be received or forwarded based on the correct first routing table, to avoid the service interruption caused by a packet loss or a forwarding error.

In addition, the routing processing result output by the routing processing module may include one piece of data, or may include a plurality of pieces of data. If the routing processing result output by each routing processing module includes the plurality of pieces of data, to improve analysis efficiency, a checksum of the routing processing result output by each of the plurality of routing processing modules may be separately calculated, and then checksums respectively corresponding to the plurality of routing processing modules are analyzed.

For example, routing processing results output by a routing processing module A, a routing processing module B, and a routing processing module C each include three pieces of data. A checksum a of the three pieces of data output by the routing processing module A, a checksum b of the three pieces of data output by the routing processing module B, and a checksum c of the three pieces of data output by the routing processing module C may be separately calculated. The analysis is performed based on the checksum a, the checksum b, and the checksum c.

A specific method for analyzing the checksum is similar to the method for analyzing the routing processing result. To be specific, the majority rule can also be used for the analysis.

In a possible implementation, the checksums corresponding to the plurality of routing processing modules are grouped, and each group includes a same checksum. When a quantity of checksums in one group is greater than a quantity of checksums in any other group, a routing processing result corresponding to any checksum among checksums in the group is selected as the first routing processing result.

In another possible implementation, when a quantity of same checksums in checksums corresponding to the at least three routing processing modules is greater than half of a total quantity of checksums, any checksum among the same checksums is selected based on the analysis result, and a routing processing result corresponding to the any checksum is used as the first routing processing result.

Certainly, the foregoing two implementations do not constitute a limitation on the technical solutions of this application, and persons skilled in the art may design the technical solutions based on an actual situation.

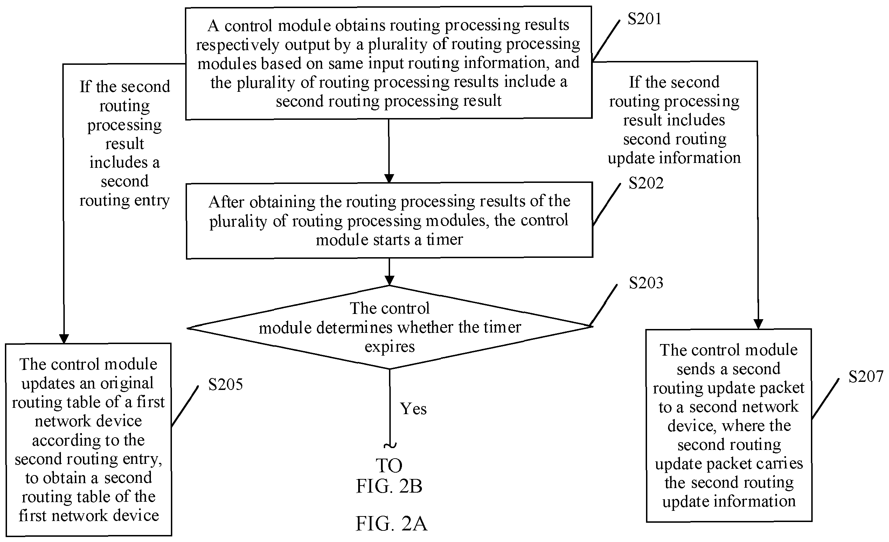

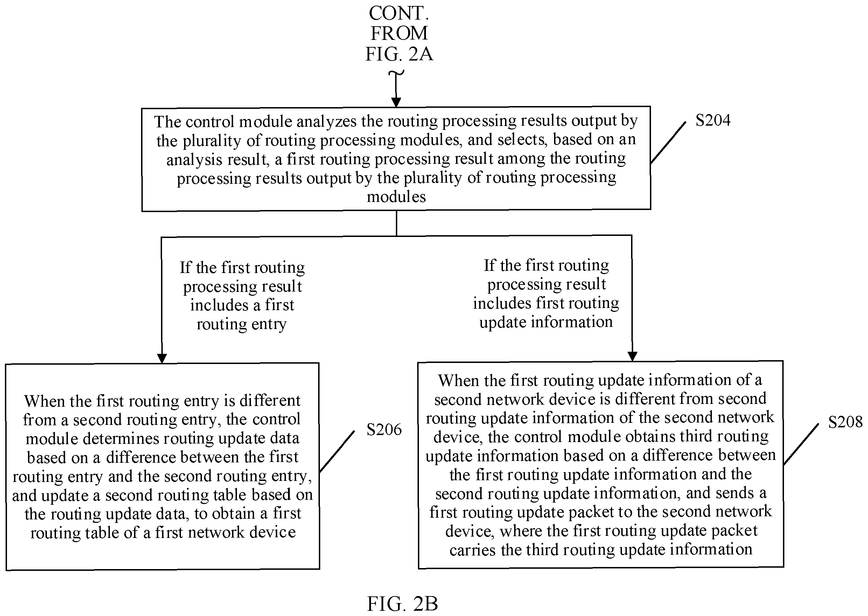

FIG. 2A and FIG. 2B are another flowchart of a routing processing method according to an embodiment of this application.

The routing processing method provided in this embodiment of this application may be applied to a first network device. A plurality of routing processing modules run on the first network device, and the plurality of routing processing modules implement a same routing processing function.

The method may be performed by a control module, and specifically includes the following steps.

S201: The control module obtains routing processing results respectively output by the plurality of routing processing modules based on same input routing information.

In this embodiment of this application, content of the step S201 is the same as that of the step S101. For related explanations, refer to the foregoing descriptions. Details are not described herein again.

S202: After obtaining the routing processing results from the plurality of routing processing modules, the control module starts a timer.

S203: The control module determines whether the timer expires, and triggers a step S204 if the timer expires.

In an actual application, although the plurality of routing processing modules can implement the same function, the plurality of routing processing modules may use different algorithms. Some modules use a simple algorithm, which takes less time. Some modules use a complex algorithm, which takes more time. Therefore, at least three routing processing modules may output routing processing results at different time.

In addition, the plurality of routing processing modules may sequentially read same routing information from a queue. Some queues have a function of combining processing routing information, but the combination processing takes a specific period of time. In the process, different routing processing modules may read, at different time points, different combined processed routing information from the queue. As a result, time for processing the combined routing information is different. This is also the reason why time for outputting the routing processing results by the plurality of routing processing modules may be different.

For example, it is assumed that the queue includes the following routing information: creating a route whose label is 100, changing the label 100 to a label 110, and changing the label 110 to a label 200. It is assumed that the routing information is merged in the queue once to be creating a route whose label is 110, and changing the label 110 to a label 200, and merged in the queue twice to be creating a route whose label is 200. A routing processing module A reads and processes routing information that is not combined. A routing processing module B reads and processes routing information that is combined once. A routing processing module C reads and processes routing information that is combined twice. It can be understood that time when the routing processing module A outputs a routing processing result may be later than time when the routing processing module B outputs a routing processing result. The time when the routing processing module B outputs the routing processing result may be later than time when the routing processing module C outputs a routing processing result.

Sometimes, the routing processing module does not output the routing processing result after processing the routing information. The foregoing example is used as an example. It is assumed that the routing information further includes deleting the route whose label is 200. If routing processing modules A, B, and C are logic correct, the routing processing results obtained by processing the routing information are combined, and the routing processing results do not need to be output. It is assumed that the logic error occurs in the routing processing module A, and the routing information about deleting the route whose label is 200 is not processed, a routing processing result of processing the routing information which is creating the label 200 is output. However, the routing processing module B and the routing processing module C are normal, and do not output routing processing results. If a next action is not executed until the routing processing module B and the routing processing module C output the routing processing results, it is definitely impossible.

Therefore, in this embodiment of this application, after obtaining the routing processing results from the plurality of routing processing modules, the control module starts the timer. When the timer expires, a step S204 is triggered to analyze the routing processing results output by the plurality of routing processing modules, and select, based on an analysis result, a first routing processing result among the routing processing results output by the plurality of routing processing modules.

In a specific implementation, the control module may start the timer when obtaining a first routing processing result. In other words, the timer starts counting from 0. If a controller obtains another routing processing result during a counting period of the timer, the timer is restarted. To be specific, the timer restarts counting from 0. If the controller does not obtain a routing processing result during the counting period of the timer, the step S204 is triggered when the timer expires.

The following is an example. It is assumed that the control module first obtains the routing processing result output by the routing processing module A at 1:00. Because only the routing processing result is obtained at this time, the timer may be started at 1:00 for first counting. It is assumed that scheduled time is 10 seconds. It is assumed that when the timer counts for 5 seconds, the control module obtains the routing processing result output by the routing processing module B. Because the 5 seconds are less than the 10 seconds, the timer may be restarted for second counting. It is assumed that the timer does not receive the routing processing result output by the routing processing module C when the timer counts 10 seconds, it is considered that the routing processing result output by the routing processing module C is null. Therefore, routing processing results actually output by routing processing modules A and B and the null routing processing result "output" by the routing processing module C may be used for subsequent analysis.

In addition, it should be noted that one routing processing result may include one or more routing processing sub-results. A quantity of routing processing sub-results included in one routing processing result output by different routing processing modules based on the same routing information may be the same or different.

The foregoing example is used as an example, if the routing processing modules A, B, and C do not combine the routing processing sub-results obtained through respective processing, the routing processing result output by the routing processing module A includes four routing processing sub-results. A first routing processing sub-result is a routing processing sub-result obtained by processing a newly created route whose label is 100. A second routing processing sub-result is a routing processing sub-result obtained by changing the label 100 to the label 110. A third routing processing sub-result is a routing processing sub-result obtained after changing the label 110 to the label 200. A fourth routing processing sub-result is a routing processing sub-result obtained by deleting the route whose label is 200. The routing processing result output by the routing processing module B includes three routing processing sub-result. A first routing processing sub-result is a routing processing sub-result obtained by processing a newly created route whose label is 110. A second routing processing sub-result is a routing processing sub-result obtained by changing the label 110 to the label 200. A third routing processing sub-result is a routing processing sub-result obtained after deleting the label 200. The routing processing result output by the routing processing module C includes two routing processing sub-results. A first routing processing sub-result is a routing processing sub-result obtained by processing a newly created route whose label is 200. A second routing processing sub-result is a routing processing sub-result obtained by deleting the route whose label is 200.

When at least one routing processing result includes a plurality of routing processing sub-results, the controller may start the timer when obtaining a first routing processing sub-result. During the counting period of the timer, if the controller obtains another routing processing sub-result, the timer is restarted. If the controller does not obtain a routing processing sub-result during the counting period of the timer, the step S204 is triggered when the timer expires.

For example, it is assumed that the control module first obtains the first routing processing sub-result output by the routing processing module A, namely, the routing processing sub-result obtained by processing a newly created route whose label is 100. Because only the routing processing sub-result is obtained at this time, the timer may be started. Then, when the timer counts to 3 seconds, the control module obtains the first routing processing sub-result output by the routing processing module B, namely, the routing processing sub-result obtained by processing a newly created route whose label is 110. Because the 3 seconds is less than the 10 seconds, the timer can be restarted. Then, when the timer counts to 8 seconds, the control module obtains the second routing processing sub-result output by the routing processing module A. Because the 8 seconds are less than the 10 seconds, the timer may be restarted again. The rest may be deduced by analogy. If the routing processing sub-results output by the routing processing modules A, B, and C are not obtained within 10 seconds after the timer starts counting, it is considered that the three routing processing modules complete outputting the routing processing sub-results.

S204: The control module analyzes the routing processing results output by the plurality of routing processing modules, and selects, based on the analysis result, the first routing processing result among the routing processing results output by the plurality of routing processing modules.

Content of the step S204 is the same as that of the step S102. Therefore, for related explanations, refer to the foregoing descriptions. Details are not described herein again.

It may be understood that execution of the step S204 needs to cost some time, affects timeliness of executing the corresponding action (for example, updating the original routing entry of the first network device based on the first routing entry or sending the first routing update packet to the second network device, as mentioned above), and also affects service processing efficiency. Therefore, to improve the service processing efficiency, in this embodiment of this application, when or before the step S204 is performed, a corresponding action may be first executed based on one of the plurality of routing processing modules. The one of the routing processing results may be referred to as a second routing processing result. A routing processing module that outputs the second routing processing result may be referred to as a primary routing processing module, and another routing processing module may be referred to as secondary routing processing module.

If the first routing processing result is the same as the second routing processing result, it is equivalent to verifying that the second routing processing result is correct. In this way, service interruption is avoided, the reliability of the routing processing module is ensured, and the service processing efficiency is improved. If the first routing processing result is different from the second routing processing result, a remedial measure may be taken to finally achieve an effect of performing the corresponding action based on the first routing processing result. Specific remedial measures may vary based on different routing processing results.

The following describes the technical solution in detail by using an example in which the second routing processing result includes a second routing entry or second routing update information. If the second routing processing result includes the second routing entry, steps S205 and S206 are performed. If the second routing processing result includes the second routing update information, steps S207 and S208 are performed. Steps S205 and S207 may be performed simultaneously with the step S204, or may be performed before the step S204. Steps S206 and S208 are performed after the step S204.

The following first describes a solution in which the second routing processing result includes the second routing entry.

S205: The control module updates an original routing table of the first network device according to the second routing entry, to obtain a second routing table of the first network device.

S206: When a first routing entry is different from the second routing entry, the control module determines routing update data based on a difference between the first routing entry and the second routing entry, and updates the second routing table based on the routing update data, to obtain a first routing table of the first network device.

The second routing entry is a routing entry output by the primary routing processing module. The second routing table may be obtained by updating the routing table according to the second routing entry. When determining that the first routing entry is different from the second routing entry, the control module determines the routing update data based on the difference between the first routing entry and the second routing entry, and updates the second routing table based on the routing update data, to obtain the first routing table of the first network device. The first routing table of the first network device may be considered as a routing table obtained by updating the original routing table of the first network device according to the first routing entry of the first network device. For a definition of the original routing table of the first network device, refer to the foregoing description.

For example, the second routing entry includes a destination IP address 1.1.1.1, a next-hop address 2.2.2.2, and an outbound interface 1. The first routing entry includes a destination IP address 1.1.1.1, a next-hop address 3.3.3.3, and an outbound interface 2. It can be learned that the first routing entry and the second routing entry are different, and are represented by different next-hop addresses and different outbound interfaces. Because the original routing table of the first network device is updated according to the second routing entry, the routing update data needs to be determined based on the difference between the first routing entry and the second routing entry, to modify the second routing table to the first routing table obtained by updating the original routing table according to the first routing entry. For example, the routing update data may include: updating the next-hop address corresponding to the destination IP address 1.1.1.1 to 3.3.3.3, and updating the corresponding outbound interface to the outbound interface 2.

In this embodiment of this application, when finding that the first routing entry is different from the second routing entry, the control module determines the routing update data timely based on the difference between the first routing entry and the second routing entry, and updates the second routing table based on the routing update data. In this way, the incorrect second routing table of the first network device is restored to the correct first routing table as soon as possible, to resolve the service interruption as much as possible on a basis of improving the service processing efficiency.

The following describes a solution in which the second routing processing result includes the second routing update information.

S207: The control module sends a second routing update packet to a second network device, where the second routing update packet carries the second routing update information.

The second routing update information is used to update an original routing table of the second network device, to obtain a second routing table of the second network device. For a definition of the original routing table of the second network device, refer to the foregoing description.

S208: When first routing update information of the second network device is different from the second routing update information of the second network device, the control module obtains third routing update information based on a difference between the first routing update information and the second routing update information, and sends a first routing update packet to the second network device, where the first routing update packet carries the third routing update information.

The third routing update information is used to update the second routing table of the second network device, to obtain a first routing table of the second network device. The first routing table of the second network device may be considered as a routing table obtained by updating the original routing table of the second network device based on the first routing update information.

For example, it is assumed that the first routing update information includes updating an original next-hop IP address whose destination IP address is 5.5.5.5 in the original routing table of the second network device to 100.100.100.1, and creating routing entries whose destination IP addresses are 1.1.1.1 and 2.2.2.2. The second routing update information includes updating an original next-hop IP address whose destination IP address is 5.5.5.5 in the original routing table of the second network device to 100.100.100.2, and creating routing entries whose destination IP addresses are 2.2.2.2 and 3.3.3.3.

In this case, the third routing update information may be updating the original next-hop IP address 100.100.100.2 whose destination IP address is 5.5.5.5 in the original routing table of the second network device to 100.100.100.1, creating a routing entry whose destination IP address is 1.1.1.1, and deleting the routing entry whose destination address is 3.3.3.3. After the second network device updates the second routing table of the second network device based on the third routing update information, the second network device may obtain the first routing table that may be directly obtained by updating the original routing table of the second network device based on the first routing update information.

In addition, when it is found that the first routing processing result is different from the second routing processing result, a new routing processing module may be selected among the plurality of routing processing modules as the primary routing processing module. The routing processing module may be a routing processing module that outputs the first routing processing result. The original primary routing processing module becomes a secondary routing processing module. In this way, a risk of the service interruption can be further reduced on a basis of ensuring the service processing efficiency.

The following uses an application scenario as an example to describe a routing processing method provided in an embodiment of this application.

In this application scenario, a network device S includes a first routing processing module, a second routing processing module, and a third routing processing module. The three routing processing modules implement a same routing function. In other words, all the three routing processing modules are configured to update a routing table of the network device. The first routing processing module is a primary routing processing module. Both the second routing processing module and the third routing processing module are secondary routing processing modules.

In addition, the network device S further includes a control module. The control module may include a logical voting module (logical voting module, LVM), a logical voting database (logical voting database, LVDB), and a leader election service (leader election service, LES).

The LVM is configured to obtain routing entries respectively output by the first routing processing module, the second routing processing module, and the third routing processing module based on same input routing information, and send the routing entries to the LVDB. The LVM is further configured to update the routing table of the network device S according to a routing entry output by the first routing processing module (namely, the primary routing processing module).

The LVDB is configured to receive and store the routing entries output by the first routing processing module, the second routing processing module, and the third routing processing module.

In this embodiment of this application, the LVDB has a storage function, and an analysis function.

Specifically, the LVDB is further configured to analyze the routing entries, select, based on an analysis result, a first routing entry among the routing entries output by the first routing processing module, the second routing processing module, and the third routing processing module, determine whether the first routing entry is the same as a second routing entry output by the first routing processing module, if the first routing entry is different from the second routing entry, notify the LVM that the second routing entry output by the first routing processing module is an incorrect routing entry, and obtain routing update data based on a difference between the second routing entry output by the first routing processing module and the first routing entry.

The LVM is further configured to update the routing table of the network device S based on the routing update data, notify the LES to abolish an identity of the first routing processing module as the primary routing processing module, and elect a routing processing module corresponding to the first routing entry as the primary routing processing module.

For details about steps and functions of these modules, refer to the following descriptions.

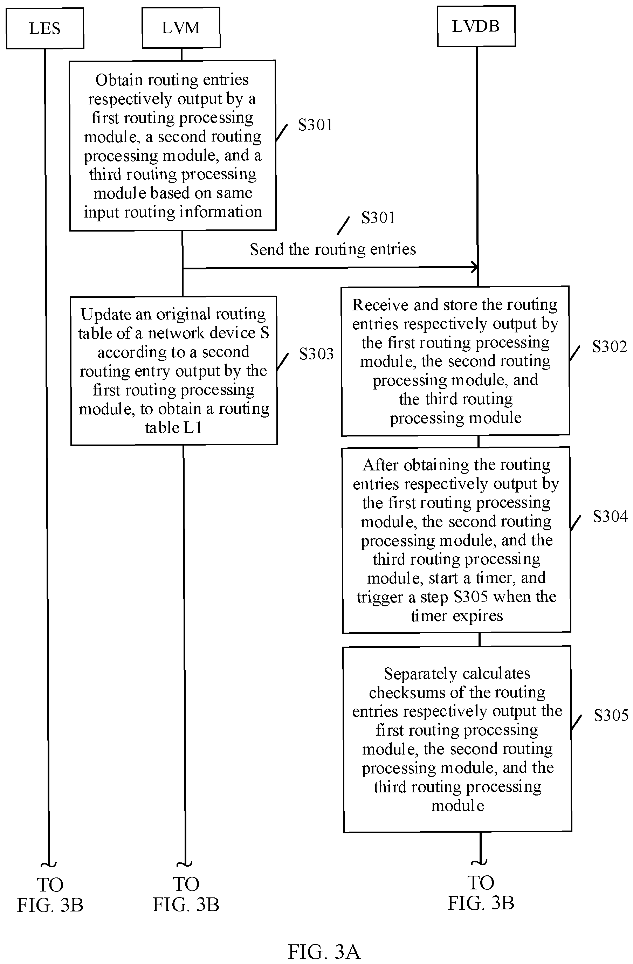

Referring to FIG. 3A to FIG. 3C, a routing processing method provided in an embodiment of this application includes the following steps.

S301: An LVM obtains routing entries respectively output by a first routing processing module, a second routing processing module, and a third routing processing module based on same input routing information, and sends the routing entries to an LVDB.

S302: The LVDB receives and stores the routing entries respectively output by the first routing processing module, the second routing processing module, and the third routing processing module.

In this embodiment of this application, the LVDB may be a memory database, or may be a persistent storage database. Data in the LVDB can be stored in a key (key)-value (value) manner or a structured format.

In this embodiment of this application, the routing entries respectively output by the first routing processing module, the second routing processing module, and the third routing processing module may include prefix information and next-hop information. The prefix information may be stored in a prefix information table of the LVDB, and the next hop information may be stored in a next-hop information table of the LVDB.

For example, refer to Table 1 and Table 2. Table 1 is a prefix information table. The prefix information table stores prefix information output by the first routing processing module. Table 2 is a next-hop information table. The next-hop information table stores next-hop information output by the first routing processing module. Table 1 and Table 2 have "directly comparable" fields and "inter-table reference and indirectly comparable" fields. The "directly comparable" field means it can be directly used in a subsequent step S305. The "inter-table reference, indirectly comparable" field means that corresponding information needs to be found from another table to perform the subsequent step S305. For example, the prefix information table includes a next-hop identifier (NextHop ID) 1000. Table 2 may be found based on the next-hop identifier 1000, to obtain next-hop information corresponding to the next-hop identifier 1000.

**Table 1**

| | | | |
|---|---|---|---|
| Key (Key) | Prefix (Prefix) / | 1.1.1.1/32 | Directly |
| | Mask length (mask length) | | comparable |
| Value (Value) -1 | Overheads (Metric) | 10 | Directly |
| | | | comparable |
| Value (Value) -2 | Tag (Tag) | 100 | Directly |
| Key (Key) | Prefix (Prefix) / | 1.1.1.1/32 | Directly |
| | Mask length (mask length) | | comparable |
| | | | comparable |
| Value (Value) -3 | Preference (Preference) | 15 | Directly |
| | | | comparable |
| Value (Value) -i | ... | ... | ... |
| Value (Value) -n | Next-hop identifier (NextHop ID) | 1000 | Inter-table reference and indirectly comparable |

**Table 2**

| | | | |
|---|---|---|---|
| Key (Key) | Next-hop identifier (NextHop ID) | 1000 | Directly |
| | | | comparable |
| Value (Value) -1 | Next-hop type (Nexthop Type) | 1 | Directly |
| | | | comparable |
| Value (Value) -2 | Original next-hop address | 2.2.2.2 | Directly |
| | (Original Nexthop) | | comparable |
| Value (Value) -3 | Original costs (Original Cost) | 50 | Directly |
| | | | comparable |
| Value (Value) -4 | Next-hop Set (Nexthop set[n]) | {N1, N2, N3,...} | Directly |
| | | | comparable |
| Value (Value) -i | ... | ... | ... |

S303: The LVM updates an original routing table of a network device S according to a second routing entry (for example, the prefix information and the next-hop information stored in Table 1 and Table 2) output by the first routing processing module, to obtain a routing table L1.

S304: After obtaining the routing entries respectively output by the first routing processing module, the second routing processing module, and the third routing processing module, the LVDB starts a timer, and triggers the step S305 when the timer expires.

It is assumed that the LVDB first obtains a routing entry output by the first routing processing module, and starts the timer to start counting. It is assumed that scheduled time is 10 seconds. The LVDB obtains a routing entry output by the third routing processing module when the timer counts to 6 seconds and restarts the timer for the counting. The LVDB obtains a routing entry output by the second routing processing module when the timer counts to 9 seconds and restarts the timer. When the timer counts to 10 seconds, the LVDB may trigger the step S305.

S305: The LVDB separately calculates checksums of the routing entries respectively output by the first routing processing module, the second routing processing module, and the third routing processing module.

S306: The LVDB analyzes checksums corresponding to the first routing processing module, the second routing processing module, and the third routing processing module, and selects, based on an analysis result, a first checksum among the checksums respectively corresponding to the first routing processing module, the second routing processing module, and the third routing processing module.

S307: When the first checksum is the same as a second checksum corresponding to the first routing processing module, the LVDB does not process, or when the first checksum is different from a second checksum, the LVDB obtains routing update data based on a difference between a routing entry corresponding to the first checksum and the second routing entry output by the first routing processing module, and sends the routing update data to the LVM

S308: The LVM receives the routing update data from the LVDB, and updates the routing table L1 by using the routing update data, to obtain a routing table L2.

The routing table L2 obtained by updating the routing table L1 by using the routing update data should be the same as routing table obtained by directly updating the original routing table of the network device S by using the first routing entry. In this way, service processing efficiency is ensured, and service interruption is resolved.

S309: When the first checksum is different from the second checksum, the LVM notifies a LES that the second routing entry output by the first routing processing module is incorrect.

S310: The LES elects the second routing processing module or the third routing processing module as the primary routing processing module, and degrades the first routing processing module to the secondary routing processing module.

When the first checksum is different from the second checksum, it indicates that the first checksum is a checksum corresponding to a routing processing result output by the second routing processing module or the third routing processing module. This is because, according to the majority rule, when a checksum corresponding to the second routing processing module is the same as a checksum corresponding to the third routing processing module, and is different from a checksum corresponding to the first routing processing module, a checksum among the checksum corresponding to the second routing processing module and the checksum corresponding to the third routing processing module is selected as the first checksum. Therefore, during the election, one of the second routing processing module and the third routing processing module may be selected as the primary routing processing module, and the first routing processing module is degraded to the secondary routing processing module. In this way, when the LVM executes a corresponding action based on a second routing processing result next time, the action may be executed based on a routing processing result output by a logical correct primary routing processing module, to improve the service processing efficiency.

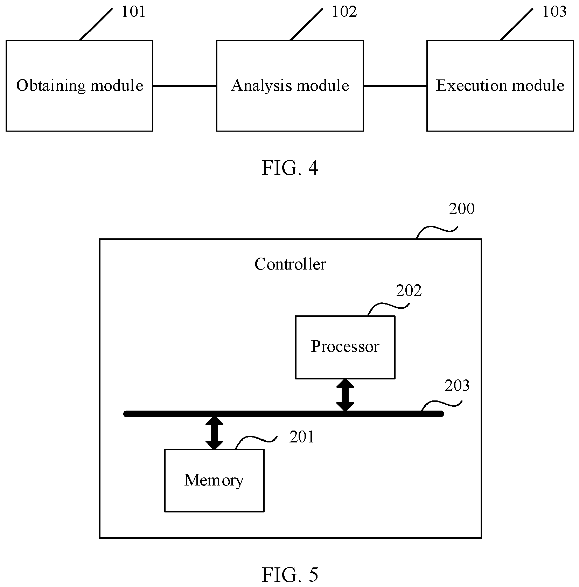

Referring to FIG. 4, an embodiment of this application further provides a routing processing apparatus, applied to a first network device. The first network device may implement functions of the first network device in the embodiments shown in FIG. 1 to FIG. 3C. A plurality of routing processing modules run on the first network device, and the plurality of routing processing modules implement a same routing processing function.

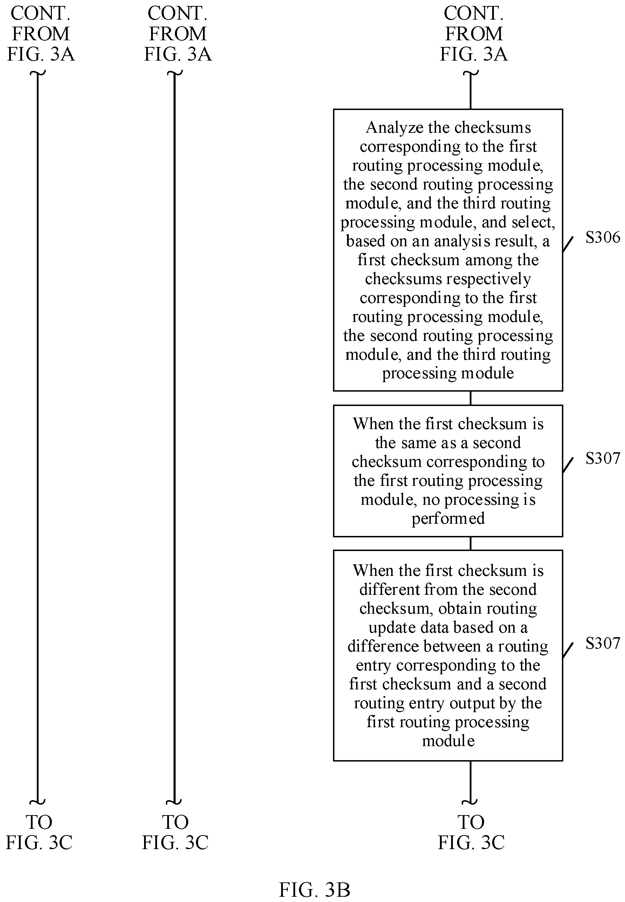

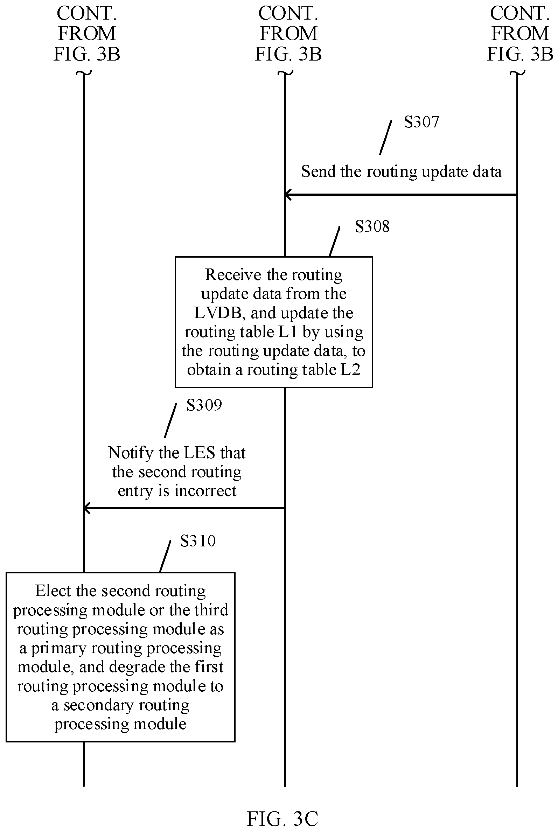

The apparatus includes an obtaining module 101, an analysis module 102, and an execution module 103. The obtaining module 101 is configured to perform the step S101 in the embodiment shown in FIG. 1, the step S201 in the embodiment shown in FIG. 2A, and the steps S301 and S302 in the embodiment shown in FIG. 3A. The analysis module 102 is configured to perform the step S102 in the embodiment shown in FIG. 1, the step S204 in the embodiment shown in FIG. 2B, and the steps S305 and S306 in the embodiment shown in FIG. 3A and FIG. 3B. The execution module 103 is configured to perform the step S103 in the embodiment shown in FIG. 1, the step S206 and/or the step S208 in the embodiment shown in FIG. 2B, and the steps S307 and S308 in the embodiment shown in FIG. 3B and FIG. 3C. Specifically, the obtaining module 101 is configured to obtain routing processing results respectively output by the plurality of routing processing modules based on same input routing information.

The analysis module 102 is configured to analyze the routing processing results output by the plurality of routing processing modules, and select, based on an analysis result, a first routing processing result among the routing processing results output by the plurality of routing processing modules.

The execution module 103 is configured to execute a corresponding action based on the first routing processing result.

In this embodiment of this application, the routing processing results output by the plurality of routing processing modules based on the same input routing information are separately obtained. The routing processing results output by the plurality of routing processing modules are analyzed. The first routing processing result among the routing processing results output by the plurality of routing processing modules is selected based on the analysis result. The first routing processing result may be considered as a routing processing result output by a normal routing processing module. In this way, the corresponding action is executed based on the first routing processing result, namely, a correct routing processing result. This can resolve service interruption caused, and improve reliability of the routing processing module.

Optionally, the apparatus further includes: a start module, configured to start a timer after the routing processing results from the plurality of routing processing modules are obtained, and trigger the analysis module when the timer expires.

Optionally, the analysis module is configured to: group the routing processing results output by the plurality of routing processing modules, where each group includes a same routing processing result, and when a quantity of routing processing results in one group is greater than a quantity of routing processing results in any other group, select any one of the routing processing results in the group as the first routing processing result.

Optionally, the plurality of routing processing modules include at least three routing processing modules; and
the analysis module is configured to: when a quantity of same routing processing results among routing processing results output by the at least three routing processing modules is greater than half of a total quantity of routing processing results, select any one of the same routing processing results as the first routing processing result.

Optionally, that the routing processing results output by the plurality of routing processing modules is analyzed includes: a checksum of a routing processing result output by each of the plurality of routing processing modules is separately calculated; and checksums respectively corresponding to the plurality of routing processing modules are analyzed.

Optionally, that the first routing processing result among the routing processing results output by the plurality of routing processing modules is selected based on the analysis result includes: the checksums corresponding to the plurality of routing processing modules are grouped, where each group includes a same checksum; and when a quantity of checksums in one group is greater than a quantity of checksums in any other group, a routing processing result corresponding to any checksum among checksums in the group is selected as the first routing processing result.

Optionally, the plurality of routing processing modules include the at least three routing processing modules; and
the first routing processing result among the routing processing results output by the plurality of routing processing modules is selected based on the analysis result includes: when a quantity of same checksums in checksums corresponding to the at least three routing processing modules is greater than half of a total quantity of checksums, any checksum among the same checksums is selected based on the analysis result, and a routing processing result corresponding to the any checksum is selected as the first routing processing result.

Optionally, the first routing processing result includes a first routing entry; and
the execution module is configured to update an original routing table of the first network device according to the first routing entry, to obtain a first routing table of the first network device.

Optionally, the first routing processing result includes a first routing entry, and the routing processing results output by the plurality of routing processing modules includes a second routing entry; and
the apparatus further includes: an update module, configured to update an original routing table of the first network device according to the second routing entry, to obtain a second routing table of the first network device; where
the execution module is configured to: when the first routing entry is different from the second routing entry, determine routing update data based on a difference between the first routing entry and the second routing entry, and update the second routing table based on the routing update data, to obtain a first routing table of the first network device.

Optionally, the first routing processing result includes first routing update information; and
the execution module is configured to send a first routing update packet to a second network device, where the first routing update packet carries the first routing update information, and the first routing update information is used to update an original routing table of the second network device, to obtain a first routing table of the second network device.

Optionally, the first routing processing result includes first routing update information, and the routing processing results output by the plurality of routing processing modules include second routing update information; and
the apparatus further includes: a sending module, configured to send a second routing update packet to a second network device, where the second routing update packet carries the second routing update information, and the second routing update information is used to update an original routing table of the second network device, to obtain a second routing table of the second network device; and
the execution module is configured to: when the second routing update information is different from the first routing update information, obtain third routing update information based on a difference between the second routing update information and the first routing update information; and send a first routing update packet to the second network device, where the first routing update packet carries the third routing update information, and the third routing update information is used to update a second routing table of the second network device, to obtain a first routing table of the second network device.

Optionally, the apparatus includes a logical voting database, and the logical voting database includes the obtaining module and the analysis module.

Optionally, the execution module is a logical voting module.

Referring to FIG. 5, an embodiment of this application further provides a controller 200. The controller 200 may include a memory 201 and a processor 202.

The memory 201 is configured to store an instruction.

The processor 202 is configured to execute the instruction in the memory 201, to perform the routing processing method.

The memory 201, and the processor 202 are mutually connected through a bus 203. The bus 203 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 5, but this does not mean that there is only one bus or only one type of bus.

The memory 201 may be a random access memory (random-access memory, RAM), a flash (flash) memory, a read-only memory (read only memory, ROM), an erasable programmable read-only memory (erasable programmable read only memory, EPROM), an electrically erasable programmable read-only memory (electrically erasable programmable read only memory, EEPROM), a register (register), a hard disk, a removable hard disk, a CD-ROM, or any other form of storage medium known to persons skilled in the art.

The processor 202 may be, for example, a central processing unit (central processing unit, CPU), a general purpose processor, a digital signal processor (digital signal processing, DSP), an application-specific integrated circuit (application-specific integrated circuit, ASIC), a field programmable gate array (field programmable gate array, FPGA), or another programmable logic device, a transistor logic device, a hardware component, or any combination thereof. The processor 202 may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor.

An embodiment of this application further provides a computer-readable storage medium, including an instruction. When the instruction is run on a computer, the computer is enabled to perform the routing processing method applied to the first network device.

In the specification, claims, and accompanying drawings of this application, the terms "first", "second", and so on (if existent) are intended to distinguish between similar objects, but do not necessarily indicate a specific order or sequence. It should be understood that the data termed in such a way are interchangeable in appropriate circumstances, so that the embodiments described herein can be implemented in other orders than the order illustrated or described herein. Moreover, the terms "include", "contain" and any other variants mean to cover the non-exclusive inclusion, for example, a process, method, system, product, or device that includes a list of steps or units is not necessarily limited to those units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be another division manner in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for indicating a computer device (which may be a personal computer, a server, or a network device) to perform all or some of the steps of the methods described in the embodiments of this application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

In the foregoing specific implementations, the objectives, technical solutions, and benefits of the present invention are further described in detail. It should be understood that the foregoing descriptions are merely specific implementations of the present invention.

In conclusion, the foregoing embodiments are merely intended to describe the technical solutions of this application, but not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A routing processing method, applied to a first network device, wherein a plurality of routing processing modules run on the first network device, the plurality of routing processing modules implement a same routing processing function, and the method comprises:
obtaining routing processing results respectively output by the plurality of routing processing modules based on same input routing information; and
analyzing the routing processing results output by the plurality of routing processing modules, selecting, based on an analysis result, a first routing processing result among the routing processing results output by the plurality of routing processing modules, and executing a corresponding action based on the first routing processing result.

2. The method according to claim 1, wherein the method further comprises:
starting a timer after the routing processing results from the plurality of routing processing modules are obtained; and
when the timer expires, triggering a step of the analyzing the routing processing results output by the plurality of routing processing modules.

3. The method according to claim 1 or claim 2, wherein the selecting, based on an analysis result, a first routing processing result among the routing processing results output by the plurality of routing processing modules comprises:
grouping the routing processing results output by the plurality of routing processing modules, wherein each group comprises a same routing processing result; and
when a quantity of routing processing results in one group is greater than a quantity of routing processing results in any other group, selecting any one of the routing processing results in the group as the first routing processing result.

4. The method according to claim 1 or claim 2, wherein the plurality of routing processing modules comprise at least three routing processing modules; and
the selecting, based on an analysis result, a first routing processing result among the routing processing results output by the plurality of routing processing modules comprises:
when a quantity of same routing processing results among routing processing results output by the at least three routing processing modules is greater than half of a total quantity of routing processing results, selecting any one of the same routing processing results as the first routing processing result.

5. The method according to any one of claims 1 to 4, wherein the analyzing the routing processing results output by the plurality of routing processing modules comprises:
separately calculating a checksum of a routing processing result output by each of the plurality of routing processing modules; and
analyzing checksums respectively corresponding to the plurality of routing processing modules.

6. The method according to claim 5, wherein the selecting, based on an analysis result, a first routing processing result among the routing processing results output by the plurality of routing processing modules comprises:
grouping the checksums corresponding to the plurality of routing processing modules, wherein each group comprises a same checksum; and
when a quantity of checksums in one group is greater than a quantity of checksums in any other group, selecting a routing processing result corresponding to any checksum among checksums in the group as the first routing processing result.

7. The method according to claim 5, wherein the plurality of routing processing modules comprise the at least three routing processing modules; and
the selecting, based on an analysis result, a first routing processing result among the routing processing results output by the plurality of routing processing modules comprises:
when a quantity of same checksums in checksums corresponding to the at least three routing processing modules is greater than half of a total quantity of checksums, selecting any checksum among the same checksums based on the analysis result, and using a routing processing result corresponding to the any checksum as the first routing processing result.

8. The method according to any one of claims 1 to 7, wherein the first routing processing result comprises a first routing entry; and
the executing a corresponding action based on the first routing processing result comprises:
updating an original routing table of the first network device according to the first routing entry, to obtain a first routing table of the first network device.

9. The method according to any one of claims 1 to 7, wherein the first routing processing result comprises a first routing entry, and the routing processing results output by the plurality of routing processing modules comprise a second routing entry;
before the executing a corresponding action based on the first routing processing result, the method further comprises:
updating an original routing table of the first network device according to the second routing entry, to obtain a second routing table of the first network device; and
the executing a corresponding action based on the first routing processing result comprises:
when the first routing entry is different from the second routing entry, determining routing update data based on a difference between the first routing entry and the second routing entry; and
updating the second routing table based on the routing update data, to obtain a first routing table of the first network device.

10. The method according to any one of claims 1 to 7, wherein the first routing processing result comprises first routing update information; and
the executing a corresponding action based on the first routing processing result comprises:
sending a first routing update packet to a second network device, wherein the first routing update packet carries the first routing update information, and the first routing update information is used to update an original routing table of the second network device, to obtain a first routing table of the second network device.

11. The method according to any one of claims 1 to 7, wherein the first routing processing result comprises first routing update information, and the routing processing results output by the plurality of routing processing modules comprise second routing update information;
before the executing a corresponding action based on the first routing processing result, the method further comprises:
sending a second routing update packet to a second network device, wherein the second routing update packet carries the second routing update information, and the second routing update information is used to update an original routing table of the second network device, to obtain a second routing table of the second network device; and
the executing a corresponding action based on the first routing processing result comprises:
when the second routing update information is different from the first routing update information, obtaining third routing update information based on a difference between the second routing update information and the first routing update information; and
sending a first routing update packet to the second network device, wherein the first routing update packet carries the third routing update information, and the third routing update information is used to update a second routing table of the second network device, to obtain a first routing table of the second network device.

12. The method according to any one of claims 1 to 11, wherein the obtaining routing processing results respectively output by the plurality of routing processing modules based on same input routing information comprises:
obtaining, by a logical voting database, the routing processing results respectively output by the plurality of routing processing modules based on the same input routing information; and
the analyzing the routing processing results output by the plurality of routing processing modules, and selecting, based on an analysis result, a first routing processing result among the routing processing results output by the plurality of routing processing modules comprises:
analyzing, by the logical voting database, the routing processing results output by the plurality of routing processing modules, and selecting, based on the analysis result, the first routing processing result among the routing processing results output by the plurality of routing processing modules.

13. The method according to any one of claims 1 to 12, wherein the executing a corresponding action based on the first routing processing result comprises:
executing, by the logical voting module, the corresponding action based on the first routing processing result.

14. A routing processing apparatus, applied to a first network device, wherein a plurality of routing processing modules run on the first network device, the plurality of routing processing modules implement a same routing processing function, and the apparatus comprises:
an obtaining module, configured to obtain routing processing results respectively output by the plurality of routing processing modules based on same input routing information;
an analysis module, configured to analyze the routing processing results output by the plurality of routing processing modules, and select, based on an analysis result, a first routing processing result among the routing processing results output by the plurality of routing processing modules; and
an execution module, configured to execute a corresponding action based on the first routing processing result.

15. The apparatus according to claim 14, wherein the apparatus further comprises:
a start module, configured to start a timer after the routing processing results from the plurality of routing processing modules are obtained, and trigger the analysis module when the timer expires.

16. The apparatus according to claim 14 or claim 15, wherein
the analysis module is configured to: group the routing processing results output by the plurality of routing processing modules, wherein each group comprises a same routing processing result, and when a quantity of routing processing results in one group is greater than a quantity of routing processing results in any other group, select any one of the routing processing results in the group as the first routing processing result.

17. The apparatus according to claim 14 or claim 15, wherein the plurality of routing processing modules comprise at least three routing processing modules; and
the analysis module is configured to: when a quantity of same routing processing results among routing processing results output by the at least three routing processing modules is greater than half of a total quantity of routing processing results, select any one of the same routing processing results as the first routing processing result.

18. The apparatus according to any one of claims 14 to 17, wherein that the routing processing results output by the plurality of routing processing modules are analyzed comprises:
a checksum of a routing processing result output by each of the plurality of routing processing modules is separately calculated; and
checksums respectively corresponding to the plurality of routing processing modules are analyzed.

19. The apparatus according to claim 18, wherein that the first routing processing result among the routing processing results output by the plurality of routing processing modules is selected based on the analysis result comprises:
the checksums corresponding to the plurality of routing processing modules are grouped, and each group comprises a same checksum; and
when a quantity of checksums in one group is greater than a quantity of checksums in any other group, a routing processing result corresponding to any checksum among checksums in the group is selected as the first routing processing result.

20. The apparatus according to claim 18, wherein the plurality of routing processing modules comprise the at least three routing processing modules; and
the first routing processing result among the routing processing results output by the plurality of routing processing modules is selected based on the analysis result comprises:
when a quantity of same checksums in checksums corresponding to the at least three routing processing modules is greater than half of a total quantity of checksums, any checksum among the same checksums is selected based on the analysis result, and a routing processing result corresponding to the any checksum is selected as the first routing processing result.

21. The apparatus according to any one of claims 14 to 20, wherein the first routing processing result comprises a first routing entry; and
the execution module is configured to update an original routing table of the first network device according to the first routing entry, to obtain a first routing table of the first network device.

22. The apparatus according to any one of claims 14 to 20, wherein the first routing processing result comprises a first routing entry, and the routing processing results output by the plurality of routing processing modules comprise a second routing entry; and
the apparatus further comprises:
an update module, configured to update an original routing table of the first network device according to the second routing entry, to obtain a second routing table of the first network device; wherein
the execution module is configured to: when the first routing entry is different from the second routing entry, determine routing update data based on a difference between the first routing entry and the second routing entry, and update the second routing table based on the routing update data, to obtain a first routing table of the first network device.

23. The apparatus according to any one of claims 14 to 20, wherein the first routing processing result comprises first routing update information; and
the execution module is configured to send a first routing update packet to a second network device, wherein the first routing update packet carries the first routing update information, and the first routing update information is used to update an original routing table of the second network device, to obtain a first routing table of the second network device.

24. The apparatus according to any one of claims 14 to 20, wherein the first routing processing result comprises first routing update information, and the routing processing results output by the plurality of routing processing modules comprise second routing update information; and
the apparatus further comprises:
a sending module, configured to send a second routing update packet to a second network device, wherein the second routing update packet carries the second routing update information, and the second routing update information is used to update an original routing table of the second network device, to obtain a second routing table of the second network device; and
the execution module is configured to: when the second routing update information is different from the first routing update information, obtain third routing update information based on a difference between the second routing update information and the first routing update information; and send a first routing update packet to the second network device, wherein the first routing update packet carries the third routing update information, and the third routing update information is used to update a second routing table of the second network device, to obtain a first routing table of the second network device.

25. The apparatus according to any one of claims 14 to 24, wherein the apparatus comprises a logical voting database, and the logical voting database comprises the obtaining module and the analysis module.

26. The apparatus according to any one of claims 14 to 25, wherein the execution module is a logical voting module.

27. A routing processing device, wherein the device is a first network device, and the first network device comprises a storage unit and a processing unit;
the storage unit is configured to store an instruction; and
the processing unit is configured to execute the instruction in the storage unit, to perform the method according to any one of claims 1 to 13.

28. A computer-readable storage medium, comprising an instruction, wherein when the instruction is run on a computer, the computer is enabled to perform the method according to any one of claims 1 to 13.
